(19) Europäisches Patentamt / European Patent Office / Office européen des brevets

(11) **EP 4 604 030 A1**

(12) **EUROPEAN PATENT APPLICATION**

(43) Date of publication:
**20.08.2025 Bulletin 2025/34**

(21) Application number: **24208770.8**

(22) Date of filing: **24.10.2024**

(51) International Patent Classification (IPC):
**G06Q 10/04** (2023.01)      **G06Q 10/06** (2023.01)
**G06Q 40/06** (2012.01)

(52) Cooperative Patent Classification (CPC):
**G06Q 10/04; G06Q 10/06; G06Q 40/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2024 JP 2024021337**

(71) Applicant: **Hitachi, Ltd.**
**Tokyo 100-8280 (JP)**

(72) Inventors:
• **NISHIDE, Akinori**
  **Tokyo, 100-8280 (JP)**
• **TANABE, Yosuke**
  **Tokyo, 100-8280 (JP)**
• **WATANABE, Koichi**
  **Tokyo, 100-8280 (JP)**
• **NAITO, Kenta**
  **Tokyo, 100-8280 (JP)**
• **HASEGAWA, Hiroaki**
  **Tokyo, 100-8280 (JP)**

(74) Representative: **Mewburn Ellis LLP**
**Aurora Building**
**Counterslip**
**Bristol BS1 6BX (GB)**

(54) **ENVIRONMENT EVALUATION SYSTEM**

(57)    An environment evaluation system stores first data on an ecosystem of a conservation target area, second data on land use of the conservation target area, and third data on a conservation scenario in the conservation target area. The environment evaluation system extracts a network structure where areas having natural capital in the conservation target area are nodes based on the second data, estimates an ecosystem function network representing types of ecosystem functions of the nodes and time-related functions of interactions between the nodes based on the first data, the third data, and the network structure, calculates an economic value of a change in the ecosystem function of the node using a conservation scenario for the node based on a budget constraint related to the conservation scenario for the node which is calculated from the ecosystem function network and the third data, and outputs the economic value.

*FIG. 1*

ECOSYSTEM FUNCTION NETWORK IMPUTED PRICE CALCULATION SYSTEM 10

LAND USE INFORMATION 11 · ENVIRONMENT INFORMATION 12 · CONSERVATION SITE INFORMATION 13 · NETWORK STRUCTURE ESTIMATION UNIT 21 · CONSERVATION INFORMATION INTEGRATION UNIT 22 · IMPUTED PRICE CALCULATION UNIT 23 · CONSERVATION EFFECT DISPLAY UNIT 24 · OUTPUT UNIT 25

# EP 4 604 030 A1

**Description**

CLAIM OF PRIORITY

The present application claims priority from Japanese patent application JP 2024-021337 filed on February 15, 2024, the content of which is hereby incorporated by reference into this application.

BACKGROUND OF THE INVENTION

1. Field of the Invention

The present invention relates to value calculation of an ecosystem function network.

2. Description of Related Art

In recent years, due to interest in global environmental conservation, efforts have been made to realize a sustainable economy by evaluating ecosystems and the atmosphere as natural capital and incorporating them into economic activities. For example, JP2014-26507A is an example of the related art of this disclosure.

JP2014-26507A discloses that "An information processing device 10 outputs an evaluation list 11a, which is a list of a plurality of ecosystem services of different types, including information indicating one or more parameters used in an evaluation method for an economic value selected for each ecosystem service. Next, the information processing device 10 receives values of one or more parameters input based on the evaluation list 11a for two or more ecosystem services among the plurality of ecosystem services listed in the evaluation list 11a. Then, the information processing device 10 calculates economic values of the two or more ecosystem services based on an evaluation method for each ecosystem service and the values of the one or more parameters input" (summary).

SUMMARY OF THE INVENTION

JP2014-26507A discloses outputting an evaluation list for each ecosystem service, which is used in an evaluation method for an economic value selected for that ecosystem service. However, since a calculation method for values is not unified, only evaluation for the past can be performed, and future ecosystem conservation scenarios cannot be analyzed.

An environment evaluation system of an aspect of the present invention includes a computation device, and a storage device, in which the storage device stores first data on an ecosystem of a conservation target area, second data on land use of the conservation target area, and third data on a conservation scenario in the conservation target area, and the computation device extracts a network structure in which areas having natural capital in the conservation target area are nodes based on the second data, estimates an ecosystem function network that represents types of ecosystem functions of the nodes and time-related functions of interactions between the nodes based on the first data, the third data, and the network structure, calculates an economic value of a change in the ecosystem function of the node using a conservation scenario for the node based on a budget constraint related to the conservation scenario for the node which is calculated from the ecosystem function network and the third data, and outputs the economic value.

According to one aspect of the present invention, ecosystem conservation scenarios can be evaluated.

BRIEF DESCRIPTION OF THE DRAWINGS

FIG. 1 shows an example of a logical configuration of an ecosystem function network imputed price calculation system according to an embodiment of the present specification;
FIG. 2 shows an example of a hardware configuration of the ecosystem function network imputed price calculation system;
FIG. 3 shows an example of information included in environment information;
FIG. 4 shows an example of information included in land use information;
FIG. 5 shows an example of information included in conservation site information;
FIG. 6 shows a configuration example of a conservation information integration unit;
FIG. 7A shows an example of an ecosystem function network structure;
FIG. 7B schematically shows a landscape of a certain area;
FIG. 7C shows an ecosystem function network structure of the area shown in FIG. 7B;

FIG. 8 schematically shows interactions between nodes;

FIG. 9 shows an example of a logical configuration of a network structure estimation unit;

FIG. 10 shows an example of a logical configuration of an imputed price calculation unit;

FIG. 11 shows an example of information referred to in order to obtain a utility function u and an asset increase/-decrease function f;

FIG. 12A shows an example of a display image generated by a conservation effect display unit and output on an output device; and

FIG. 12B shows details of sections of imputed price on an ecosystem function network in a conservation target area in the display image shown in FIG. 12A.

## DESCRIPTION OF EMBODIMENTS

Hereinafter, for convenience of description, the description will be given by making a division into a plurality of sections or examples when necessary. However, unless otherwise specified, they are not unrelated to each other, and one is a partial or complete modification, detail, supplementary description, and the like of the other. In the following description, when referring to the number of elements (including the number, numerical value, amount, range, and the like), unless otherwise specified or when it is clearly limited to a specific number in principle, it is not limited to the specific number and may be the specific number or more or less.

A processor achieves a predetermined function by executing a program stored in a main memory device. The main memory device stores the program executed by the processor and data necessary for the execution of the program. The program includes a program other than an operating system (OS) not shown in the drawing. The processor may include a plurality of chips and a plurality of packages.

A program is executed by a processor to perform predetermined processing using a storage device and a communication port (communication device). Thus, in this embodiment and other embodiments, a description in which a program is the subject may be a description in which a processor is the subject. Alternatively, the processing executed by the program is processing executed by a computer and a computer system on which the program operates.

A processor operates as a functional unit (means) that realizes a predetermined function by operating in accordance with a program. For example, the processor functions as a oo unit (oo means) by operating in accordance with a oo program, and functions as a oo unit (oo means) by operating in accordance with a oo program. The same applies to other programs. Furthermore, the processor also operates as a functional unit (means) that realizes each of a variety of processing executed by programs. A computer and a computer system are a device and a system that include these functional units (means).

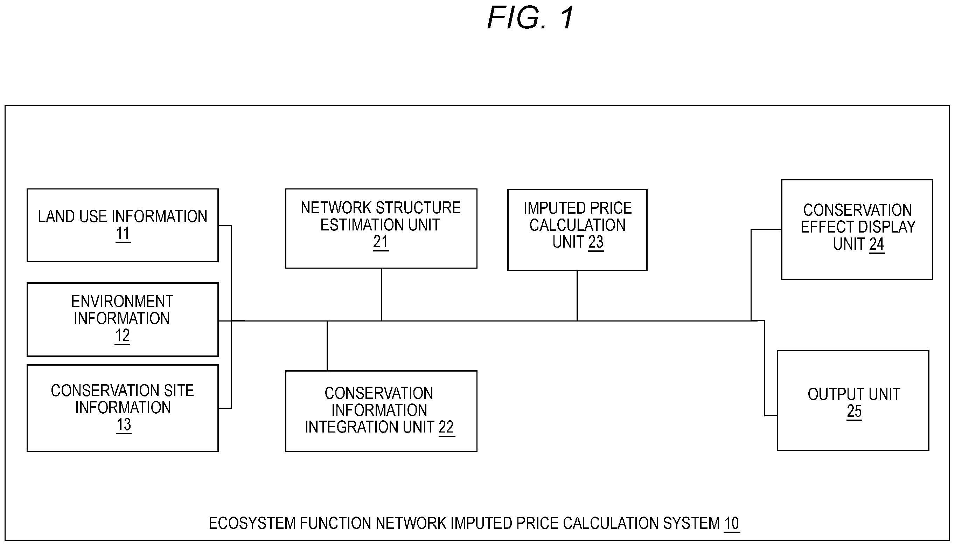

FIG. 1 shows an example of a logical configuration of an ecosystem function network imputed price calculation system 10 according to an embodiment of the present specification. The ecosystem function network imputed price calculation system 10 is an environment evaluation system. The ecosystem function network imputed price calculation system 10 holds land use information 11, environment information 12, and conservation site information 13.

The ecosystem function network imputed price calculation system 10 further includes a network structure estimation unit 21, a conservation information integration unit 22, and an imputed price calculation unit 23. In addition, the ecosystem function network imputed price calculation system 10 includes a conservation effect display unit 24 and an output unit 25.

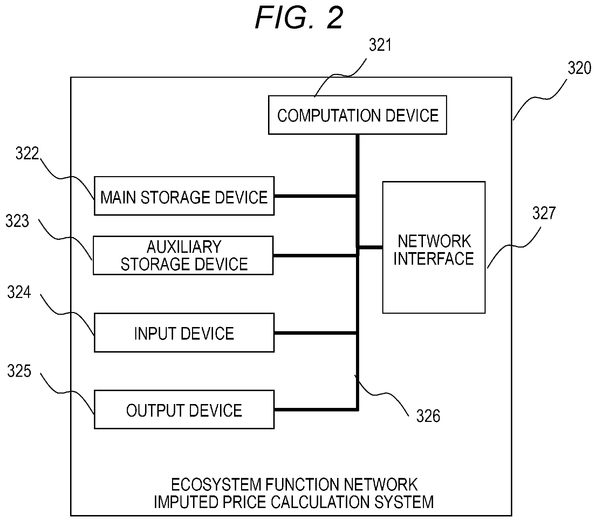

FIG. 2 shows an example of a hardware configuration of the ecosystem function network imputed price calculation system 10. FIG. 2 shows an example of a general computer configuration, and includes a computation device 321, a main storage device 322, an auxiliary storage device 323, an input device 324, an output device 325, and a network interface 327.

The parts of the ecosystem function network imputed price calculation system 10 are connected to each other so that they can communicate with each other via a communication means such as a bus 326. The ecosystem function network imputed price calculation system 10 may be configured such that the entirety or a part of the configuration is realized by a virtual resource such as a cloud server.

The computation device 321 is configured using a central processing unit (CPU), a micro processing unit (MPU), a graphics processing unit (GPU), or the like. The computation device 321 reads and executes a program stored in the main storage device 322, thereby realizing the functions of the ecosystem function network imputed price calculation system 10.

The main storage device 322 is a device that stores programs and data, and may be a read only memory (ROM), a random access memory (RAM), or a non-volatile ram (NVRAM).

The auxiliary storage device 323 is, for example, an NVRAM such as a solid state drive (SSD) or an SD memory card, an optical storage device such as a compact disc (CD) or a digital versatile disc (DVD), a hard disc drive (HDD), or a storage area of a cloud server. The auxiliary storage device 323 includes a non-transitory storage medium for storing programs and data. The programs and data stored in the auxiliary storage device 323 are read to the main storage device 322 on occasion.

The input device 324 is an interface for receiving an input of information, such as a keyboard, a mouse, a touch panel, a card reader, a microphone, or the like. Alternatively, the ecosystem function network imputed price calculation system 10 may be configured to receive an input of information from other devices via some communication means.

The output device 325 is an interface for outputting various information, such as a screen display device such as a liquid crystal monitor, a liquid crystal display (LCD), or a graphic card, a printing device, or an audio output device such as a speaker. Alternatively, the ecosystem function network imputed price calculation system 10 may be configured to output information to other devices via some communication means.

The network interface 327 is a device for the ecosystem function network imputed price calculation system 10 to communicate with other devices. Some of the components shown in FIG. 2 may be omitted, and other components may be added.

The ecosystem function network imputed price calculation system 10 can be constituted by one or a plurality of computers. In this manner, the ecosystem function network imputed price calculation system 10 can include one or more processors and one or more storage devices. The one or more processors operate as a predetermined functional unit by executing a program stored in one or more storage devices.

For example, the land use information 11, the environment information 12, and the conservation site information 13 are stored in the auxiliary storage device 323 and loaded into the main storage device 322. By executing a program loaded from the auxiliary storage device 323 to the main storage device 322, the network structure estimation unit 21, the conservation information integration unit 22, the imputed price calculation unit 23, the conservation effect display unit 24, and the output unit 25 can be operated.

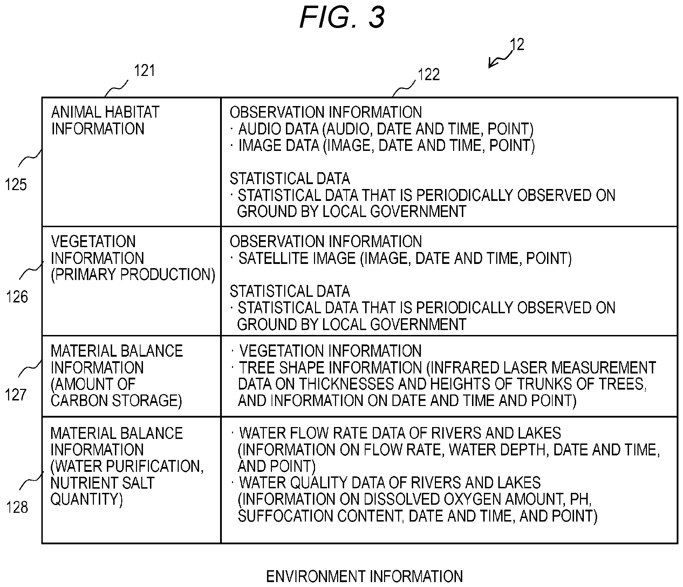

FIG. 3 shows an example of information included in the environment information 12. The environment information 12 indicates information on an ecosystem of a conservation target area, including a plurality of conservation target sites. In FIG. 3, a column 121 shows the type of information, and a column 122 shows specific data on various types of information. As shown in FIG. 3, the environment information 12 can include, for example, animal habitat information 125, primary production vegetation information 126, material balance information 127 on the amount of carbon storage, and material balance information 128 on a nutrient salt quantity.

The animal habitat information 125 can include observation information and existing statistical data on animals that inhabit a conservation target area. The observation information is, for example, data observed by humans, and can include audio data and image data. The audio data and the image data can include information on the date, time, and point of observation. The statistical data is, for example, statistical data that is periodically observed on the ground by a local government (for example, the Ministry of the Environment) and provided to the public. Information on habitats of various animals can be obtained from the animal habitat information. For example, information on animal habitats provides information on edges connecting ecosystems at different points (sites).

The vegetation information 126 can include observation information and existing statistical data on plants in the conservation target area. The observation information is, for example, satellite images and is stored together with information on the date and time and the point of imaging. The statistical data is, for example, statistical data that is periodically observed on the ground by a local government (for example, the Ministry of the Environment and the Geospatial Information Authority of Japan) and provided to the public. Information on habitats (distribution of plants), density, and primary production of various plants can be obtained from the vegetation information.

The material balance information 127 on the amount of carbon storage indicates information necessary for estimating the amount of carbon storage at each point in the conservation target area, and includes vegetation information on trees in the conservation target area and shape information on trees at each point. The shape information on trees can include infrared laser measurement data on the thicknesses and heights of the trunks of trees, and the date and time and the point of acquisition of these pieces of data. Furthermore, as a method of estimating the amount of carbon storage, an organic matter concentration in soil can be estimated by chemical analysis and multiplied by the area of the conservation target area to estimate the amount of carbon storage. With this information, the amount of carbon stored in trees and the like at each point in the conservation target area and the amount of carbon dioxide circulation can be estimated.

The material balance information 128 on a nutrient salt quantity indicates information necessary for estimating the nutrient salt quantity at each point in the conservation target area, and includes water flow rate data of rivers and lakes in the conservation target area and water quality data of the rivers and the lakes. The water flow rate data can include, for example, a flow rate, a water depth, and the date and time and the point of acquisition of data. The water quality data can include a dissolved oxygen amount, ph, a suffocation content, and the date and time and the point of acquisition of data of indices representing these chemical properties. With this information, a purification effect and a nutrient salt quantity at each lake and marsh can be estimated, and furthermore, the amount of nitrogen load carried by a river provides information on edges connecting ecosystems at different points.

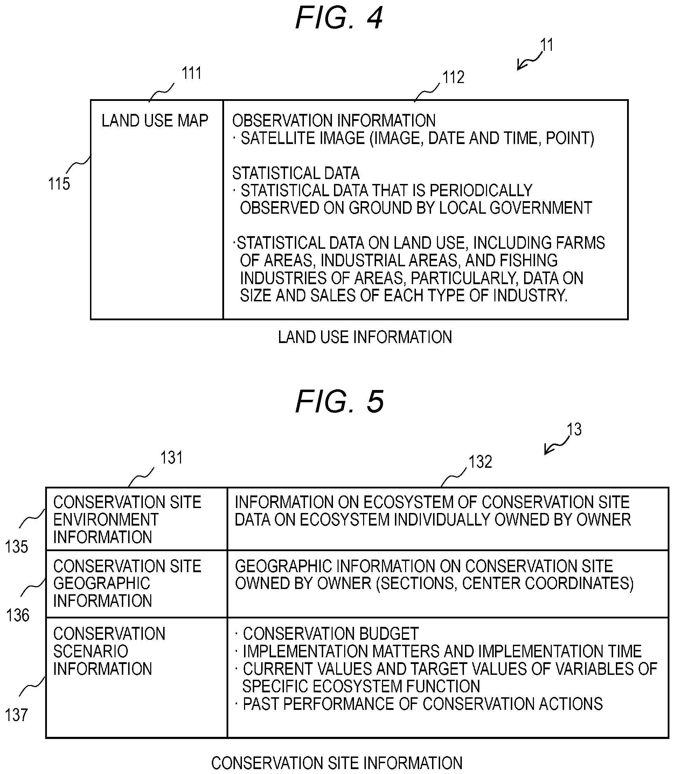

FIG. 4 shows an example of information included in the land use information 11. The land use information 11 shows information on the use of land in the conservation target area. In FIG. 4, a column 111 shows the type of information, and a column 112 shows specific data. As shown in FIG. 4, the land use information 11 can include information 115 on a land use map. The land use map shows the type of area, for example, urban areas, various farmlands, forests, rivers, and the like.

The information 115 on the land use map can include existing observation information and statistical data. The observation information may be, for example, a satellite image, and includes information on the date and time and the point of acquisition thereof. The observation data may include information obtained manually on the ground. The statistical data is, for example, statistical data that is periodically observed on the ground by a local government (for example, the Geospatial Information Authority of Japan) and provided to the public.

FIG. 5 shows an example of information included in the conservation site information 13. The conservation site information 13 shows information on each conservation site in the conservation target area. FIG. 5 shows information on one conservation area in the conservation target area. The conservation site information 13 includes information on each conservation site in the conservation target area. The conservation site information 13 may not include information on some conservation sites. The conservation site information 13 for each conservation site may be collected from the owner of the conservation site. In FIG. 5, a column 131 shows the type of information, and a column 132 shows specific data. As shown in FIG. 5, the conservation site information 13 for each conservation site can include conservation site environment information 135, conservation site geographic information 136, and conservation scenario information 137.

The conservation site environment information 135 indicates environment information on the target conservation site. Specifically, the conservation site environment information 135 can include information on the ecosystem of the conservation site and data on ecosystems individually owned by the owner of the conservation site.

The conservation site geographic information 136 may include geographic information of a conservation site owned by the owner, for example, sections and center coordinates on a map of the conservation site. The conservation scenario information 137 includes scenarios of one or a plurality of future conservation actions for a target conservation site. Conservation is any artificial action performed on a target ecosystem, and the purpose thereof includes maintenance, improvement (including restoration) or suppression of deterioration of the current ecosystem.

Each conservation scenario may include, for example, information on a conservation budget, implementation matters (conservation actions) and implementation time for conservation, and current values and target values of variables of a specific ecosystem function. The conservation budget and the implementation matters are given for the entire site or for each production system function of a conservation target in the site. For example, the conservation budget is a one-year budget, and the implementation matters for conservation may be implemented, for example, to maintain and improve the environment or maintain and improve the ecosystem. For example, conservation actions (implementation matters) are executed at specific times within a year, and a budget is allocated within the annual budget for each conservation action.

As an example of the conservation scenario, a conservation scenario for a park (site) is conceivable. The conservation scenario can include maintenance of the environment and maintenance and improvement of the ecosystem. The maintenance of the environment includes, for example, pruning trees, removal of dead plants, and maintenance of a water system in the park. The maintenance of the water system (environment) includes, for example, removal of garbage at the bottom of a pond. The maintenance and improvement of the ecosystem includes monitoring of chemical properties of the soil and the water system in the park and confirmation of improvements (target values). The conservation scenario includes information on the time and scale (budget) of implementation of conservation actions.

Another example of the conservation scenario is conservation of a private land (site) owned by a company. Conservation of green spaces scattered among buildings in the downtown area, and forests and water systems in business places in the suburbs are also conservation targets, and there are implement matters (conservation actions) and budgets required for their maintenance and improvement.

Another example of the conservation scenario is an improvement in an abandoned farmland (site). In this specification, conservation includes an action of bringing an artificially damaged environment, such as an abandoned land, closer to its natural stat. In this manner, an action of restoring a point that has become economically negative heritage and giving it a value as natural capital is included in conservation, and the time implementation and budget (implementation scale) of a conservation action are included in the conservation scenario.

As described above, the conservation scenario includes information on current values and target values of variables of a specific ecosystem function. The ecosystem function is a physical or chemical reaction involving living organisms, and can be expressed by a quantifiable variable as the presence or input/output of energy or substances. Examples of the ecosystem function include maintenance and purification of water quality by water systems and soil, carbon fixation and photosynthesis by forests, fixation of nutrients by primary production such as phytoplankton.

An example of measurement for representing an ecosystem function is measurement of movement of chemical substances. In the case of water quality, a model of an ecosystem function Q can be defined using the amount of input and output of chemical substances that represent water quality as an index. For example, an estimation model can be generated for the amount of carbon storage and photosynthesis of forests using the amount of input and output of carbon, and an estimation model can be generated for primary production using the amount of input and output of nitrogen. Based on such a model, the ecosystem function Q is defined.

For example, in a conservation scenario for improving water quality, target values of indices (variables) indicating the purity of water quality, such as pH, a dissolved oxygen amount, a total nitrogen concentration, a total phosphorus concentration, a biochemical oxygen demand (BOD), and a chemical oxygen demand (COD) are set, and implementation matters (conservation actions) and budgets thereof for achieving the target values are shown.

As another example, in a conservation scenario for forests, the amount of carbon storage of forests is set as a target value, and implementation matters and budgets thereof for achieving the target value are shown. Examples of an improvement in the amount of carbon storage include an improvement in a distribution of vegetation to increase the amount of carbon storage of afforestation and soil, and the like.

In another example of the conservation scenario, a goal is to expand the range of animals' movement or maintain their existing movement range, and maintenance of green spaces, implement matters (conservation actions) of construction of new green spaces, and the time and budge thereof are shown. Examples of green spaces established to support animals' movement are green spaces among buildings in the downtown area, parks, and forests and green spaces on the banks of rivers. For example, maintenance and improvement can be confirmed by monitoring birds and insects (variables of ecosystem functions).

The conservation scenario information 137 can further include information on the past conservation performance of the conservation site. The past performance can include a conservation budget, implementation matters and implementation time, and values of variables of a specific ecosystem function before and after a conservation action, similar to information on a future conservation scenario. The past performance makes it possible to more accurately estimate changes in variables of the ecosystem function in the conservation site using the future conservation scenario. By using this conservation performance, it is possible to more accurately estimate a time function $Q(t)$ that represents an ecosystem function to be described below. Estimation methods include estimation of functional forms using statistical processing, estimation using machine learning, and the like.

Next, the processing of the conservation information integration unit 22 will be described. The conservation information integration unit 22 integrates conservation information collected from the owner of a conservation site to generate input data for the network structure estimation unit 21 and the imputed price calculation unit 23.

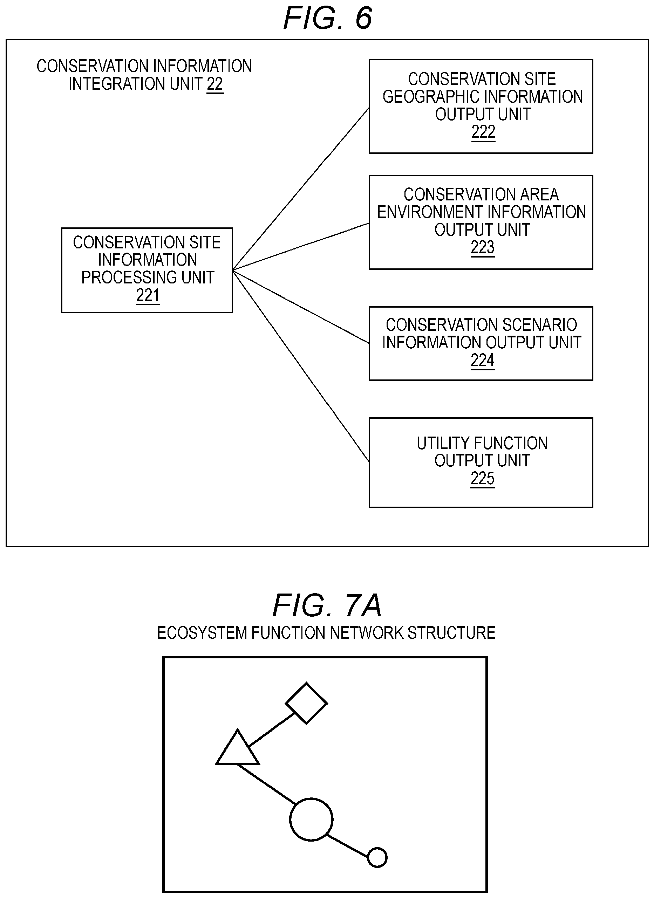

FIG. 6 shows a configuration example of the conservation information integration unit 22. The conservation information integration unit 22 includes a conservation site information processing unit 221, a conservation site geographic information output unit 222, a conservation site environment information output unit 223, a conservation scenario information output unit 224, and a utility function output unit 225.

The conservation site information processing unit 221 extracts conservation site geographic information, conservation site environment information, and conservation scenario information from the conservation site information 13 collected from the owner of the conservation site. The conservation site geographic information output unit 222, the conservation site environment information output unit 223, and the conservation scenario information output unit 224 output the conservation site geographic information, the conservation site environment information, and the conservation scenario information to other logical components or the auxiliary storage device 323, respectively.

The conservation site information processing unit 221 acquires a utility function that is predefined for a conservator of each conservation target area from the auxiliary storage device 323 and passes it to the utility function output unit 225. The utility function will be described below in detail, but is registered in the system in advance by a user who holds information on economic activities of the entire conservation target area. For example, the utility function output unit 225 outputs the utility function to other logical components.

In addition, for a specific node, information required for increasing the economic capital or increasing the economic scale from statistical data on the industry in the region can be estimated from map information and the like, and can also be assigned to the node. For example, information on sales and productivity of farms corresponds to an increase in the economic scale, which is a concept included in the utility function, and the economic scale can be estimated using statistical data on the area of farms and average sales per unit area of farms in the region in map information. The utility function output unit 225 may generate the utility function, for example, by using an existing model that represents the utility function and machine learning.

Hereinafter, processing executed by the network structure estimation unit 21 will be described. The network structure estimation unit 21 generates an ecosystem function network from information on a conservation target area. The ecosystem function network may be generated by a person and stored in the ecosystem function network imputed price calculation system 10, without being generated by the ecosystem function network imputed price calculation system 10.

FIG. 7A shows an example of an ecosystem function network structure. FIG. 7A shows an ecosystem function network structure of a part of an ecosystem function network that represents the entire conservation target area. The ecosystem function network structure includes nodes and edges that connect nodes having interactions. FIG. 7A shows four nodes and three edges.

Each node represents one ecosystem function of one site (point). The sites indicated by the nodes are conservation target sites and points other than the conservation target areas having the ecosystem functions extracted from the land use information 11 and the environment information 12. The ecosystem function indicated by the node is an ecosystem function designated for the point. Here, the points other than the conservation target areas having the ecosystem functions extracted from the land use information 11 and the environment information 12 are sections that are not conservation sites but have ecosystem functions in terms of the type of land use.

Examples thereof include lakes and marshes, farms, forests of shrines and temples, forests and ponds on private land, and the like. These types of land have ecosystem functions even when they are not conservation sites, and thus they are defined in advance in the system as nodes. A plurality of ecosystem functions can be designated for one point. That is, a plurality of nodes that show different ecosystem functions can be defined for one point. In addition, edges showing interactions between different nodes at the same point can be defined.

Each node has a shape according to the type of ecosystem function represented by the node. FIG. 7A shows examples of three types of node shapes, that is, a diamond, a triangle, and a circle. As described above, the ecosystem functions are represented by corresponding variables. The strength of the ecosystem function is represented in accordance with the value of the variable. Here, it is indicated that the land has a stronger (more abundant) ecosystem function as a node becomes larger.

For example, when the ecosystem function is represented by the amount of carbon storage, a node has a larger shape as the value of the amount of carbon storage becomes larger. When the ecosystem function is represented by the amount of oxygen supplied by photosynthesis, a node has a larger shape as the value of the amount of oxygen supplied becomes larger. When the ecosystem function is represented by any variable indicating the purity of water quality, a node has a larger shape as the value of the purity becomes closer to an ideal value. However, the type and strength of each ecosystem function of each land are represented by the shape of a node in this manner, and thus a user can easily visually recognize information on the ecosystem function of each point in the image display. Different ecosystem functions of each land may be represented in other ways.

Edges between nodes represent the interactions between the nodes. An ecosystem function of a certain land can affect an ecosystem function of another land through a specific medium. Examples of the medium include a river, an animal, wind (atmosphere), and the like. For example, chemical substances and purified water from forests and lakes can be carried to farmland via rivers and animals. More specifically, there is the circulation of nutrients. Organic matter and nitrogen compounds produced in forests, and the like flow out of the soil with rain, are collected in rivers, and then flow into lakes and the sea. Along the way, some of the nutrients are drawn into farms along with water through irrigation. These cycles are estimated from changes in water quality at each point using water quality meters installed at the sluice gates of rivers.

The nitrogen compounds are nitrate and ammonia nitrogen, and are measured by pH, a dissolved oxygen amount, a nitrate concentration, an ammonia concentration, and the like. An example of materials carried by animals and wind is seeds. Propagation of these seeds promotes primary production, for example, in farms and near farms and soil improvement by bacteria, and consequently, a nutritional state in the farms is adjusted.

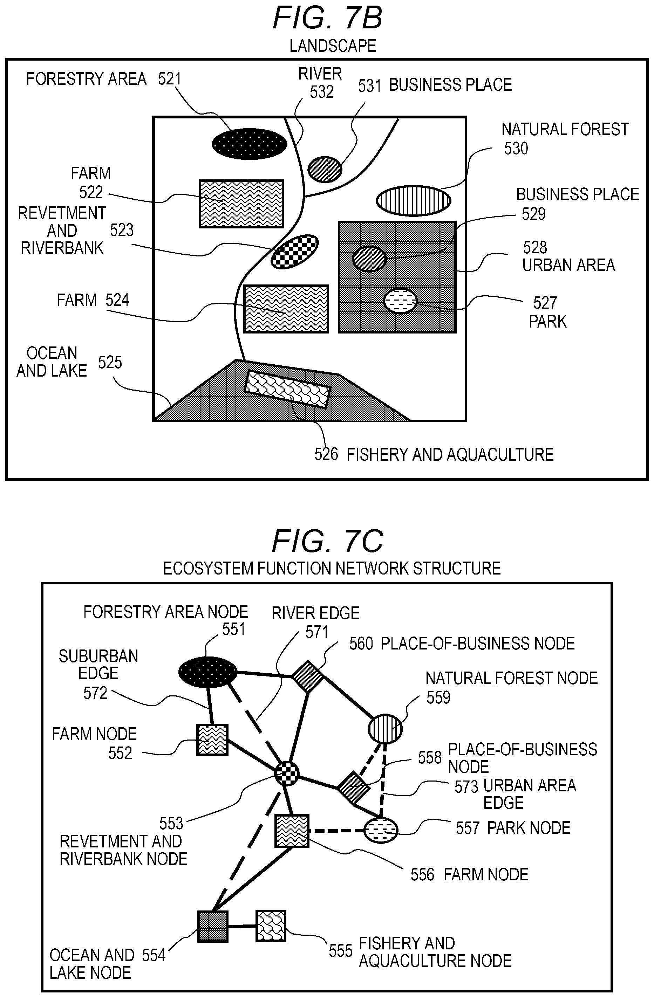

FIG. 7B shows a schematic diagram of a landscape of a certain area, and FIG. 7C shows an ecosystem function network structure extracted from information on the area shown in FIG. 7B. In FIG. 7B, some areas in the landscape are indicated by reference numerals 521 to 532. In FIG. 7C, nodes 551 to 560 and edges 571 to 573 are indicated by symbols as examples. In the ecosystem function network structure shown in FIG. 7C, a combination of the shape and pattern of a node represents the type of ecosystem function of the node. In addition, the size of the node represents the strength of the ecosystem function. Further, the type of edge represents the type of medium for interaction. The ecosystem function network structure is shown in the drawing in this manner, and thus the user can intuitively and easily grasp the ecosystem function network structure.

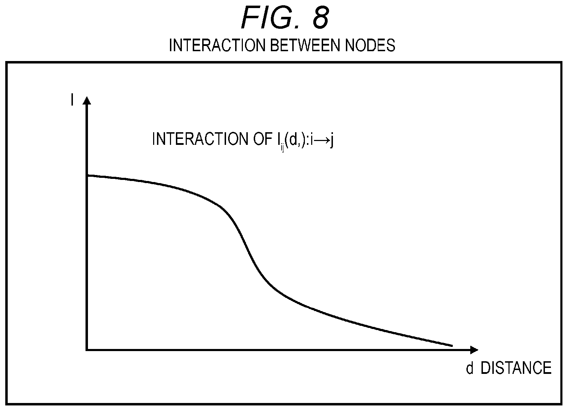

FIG. 8 schematically shows interactions between nodes. In a graph of FIG. 8, the horizontal axis represents a distance d between the nodes, and the vertical axis represents an interaction $I_{ij}(d)$ from a node i to a node j. The interaction $I_{ij}$ can be expressed by the value of a variable of an ecosystem function of the affected node j. The node i and the node j each include information on a location and the type and strength of the ecosystem function. In the example shown in FIG. 8, variables of a function of an interaction between nodes include a distance between the nodes. The variables can further include the strength of an ecosystem function of each node and the strength of an ecosystem function of a medium such as a river. Distance dependency of an interaction between nodes may be different for each type of node.

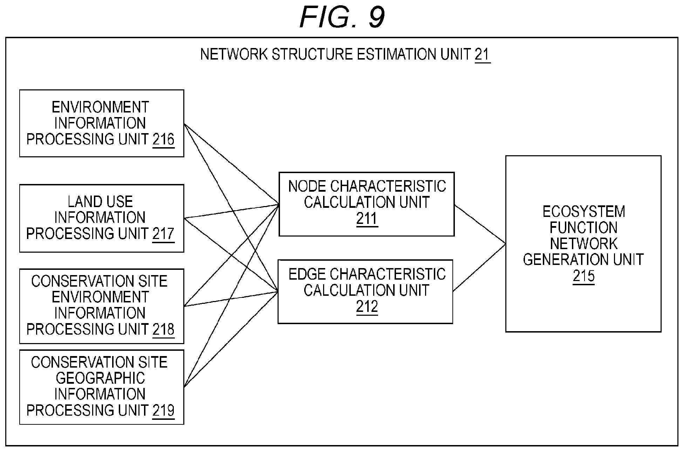

FIG. 9 shows an example of a logical configuration of the network structure estimation unit 21. The network structure estimation unit 21 includes a node characteristic calculation unit 211, an edge characteristic calculation unit 212, and an ecosystem function network generation unit 215. The network structure estimation unit 21 further includes an environment information processing unit 216, a land use information processing unit 217, a conservation site environment information processing unit 218, and a conservation site geographic information processing unit 219.

The environment information processing unit 216 extracts information for generating characteristic information of nodes and edges of the ecosystem function network from the environment information 12. Specifically, a distribution of specific values within a conservation target area is extracted from various information 125 to 128 included in the environment information 12.

The environment information processing unit 216 generates an animal habitat distribution map from the animal habitat information 125. The animal habitat distribution map shows a habitat range as a layer on, for example, geographic information system (GIS) data. When the animal habitat distribution map is generated, a maximum movement range of various animals is estimated from observation information, and statistical data can be used as a constraint condition for the estimated range.

The environment information processing unit 216 generates a plant species distribution map from the vegetation information 126. The plant species distribution map shows a distribution of plant species as a layer on, for example, GIS data. When the plant species distribution map is generated, for example, interpretation processing is performed on satellite images using a machine learning model or the like, and a distribution and density of plants are calculated.

The environment information processing unit 216 generates a distribution of the amounts of carbon storage from the material balance information 127 on the amount of carbon storage. Regarding the distribution of the amounts of carbon storage, a distribution of the amounts of carbon storage of a target conservation area is shown as a layer on the GIS data. From the distribution of the amounts of carbon storage, the amount of carbon storage and the amount of carbon dioxide circulation can be extracted as characteristic information of the nodes of the ecosystem function network structure.

A carbon amount distribution can be generated, for example, by extracting the thicknesses of tree trunks from infrared laser measurement data and determining a carbon storage amount coefficient for each type of tree from the vegetation information. From these pieces of information, a distribution of the entire carbon storage amount in the target conservation area and a distribution of circulation rates of carbon dioxide per unit area can be calculated. The circulation rate of carbon dioxide per unit area is, for example, a carbon dioxide absorption rate of a forest per $km^2$. This distribution is defined as a distribution of circulation rates of carbon dioxide per unit area.

The environment information processing unit 216 extracts the amount of nitrogen load carried by a river, and a purification effect and a nutrient salt quantity at a lake from the material balance information 128 on a water purification effect and a nutrient salt quantity. For example, the specification of rivers can be extracted as characteristics of edges of the ecosystem function network, and a purification effect of lakes and marshes, a nutrient salt quantity, and the like can be extracted as node characteristics.

For example, the environment information processing unit 216 can calculate a water flow rate of a river from a water depth of the river and flow rate data, and calculate the amount of nitrogen load carried by the river from the water flow rate and a nitrogen content. In addition, it is possible to estimate a purification effect of a river and a lake from a dissolved oxygen amount and pH.

The land use information processing unit 217 generates graphic information of nodes and edges of an ecosystem function network structure of a conservation target area from the land use information 11. For example, the land use information processing unit 217 executes interpretation processing on satellite images using a machine learning model or the like. As learning data, a land use map at a certain point in time published by the Geospatial Information Authority of Japan can be used.

The land use information processing unit 217 extracts section information from the determined use map. The section information indicates the areas of sections and the coordinates of a center point. Among the coordinates of the center point, the coordinates of a point (forest, lake, marsh, or the like) where a substance is produced by an ecosystem function or a point (farm or the like) where a substance is consumed are adopted as node coordinates of the ecosystem function network structure. The type of section of a point extracted as a node may be defined in advance. A distance between center points is adopted as edge information of the ecosystem function network structure. In addition, rivers are extracted as edges. Division of points extracted as edges may be defined in advance.

The conservation site environment information processing unit 218 performs the same processing as the environment information processing unit 216 on the conservation site environment information 135. Processing results of the conservation site environment information processing unit 218 may be added to processing results of the environment information processing unit 216.

The conservation site geographic information processing unit 219 performs the same processing as the land use information processing unit 217 on the conservation site geographic information 136. Processing results of the conservation site geographic information processing unit 219 may be added to processing results of the land use information processing unit 217.

As described above, from the information 11, 12, and 13 collected from the outside, an animal habitat distribution map, a plant species distribution map, a distribution map of variables representing ecosystem functions, and land use classification information are acquired. From this information, the network structure estimation unit 21 generates an ecosystem function network for the entire conservation target area. The ecosystem function network includes nodes and edges connecting the nodes. Characteristics of these components are calculated.

The node characteristic calculation unit 211 calculates characteristics of the nodes of the ecosystem function network. The node characteristic calculation unit 211 acquires information on an ecosystem such as the amount of carbon storage, the amount of carbon dioxide circulation, a water purification effect, and a nutrient salt quantity from the environment information processing unit 216 and the conservation site environment information processing unit 218. In addition, the node characteristic calculation unit 211 obtains graphical information (node coordinates and distance between nodes) of the nodes and edges of the network structure from the land use information processing unit 217 and the conservation site geographic information processing unit 219. The node characteristic calculation unit 211 assigns ecosystem function information to each of the nodes of the ecosystem function network structure. A relationship between the type of land section and the ecosystem function of the node may be defined in advance, and the ecosystem function of the node may be determined accordingly.

The edge characteristic calculation unit 212 calculates characteristics of the edges of the ecosystem function network. The edge characteristic calculation unit 212 acquires ecosystem information such as the amount of nitrogen load carried by a river, GIS data of animal habitat information, and GIS data of a vegetation map from the environment information processing unit 216 and the conservation site environment information processing unit 218. Furthermore, graphic information (node coordinates and a distance between nodes) of the nodes and edges of the network structure is acquired from the land use information processing unit 217 and the conservation site geographic information processing unit 219.

The edge characteristic calculation unit 212 estimates the amounts of animal and vegetation advection between nodes using node coordinates and GIS data of animal habitat distribution and plant species distribution maps. The amount of animal advection can be estimated from a movement range and a speed. Regarding the amount of vegetation advection, a function that attenuates in the distance is defined as a function of a distance, with the coordinates of a certain node as the center. These amounts of advection are included in edge information. In addition, the amount of nitrogen load carried by a river can be included in, for example, the edge information between lakes and marshes. In this manner, a relationship between the type of land section and the advection of materials along an edge may be defined in advance, and characteristics of the edge may be determined accordingly.

Since the obtained edge information is the amount of advection between unit distances, the edge characteristic calculation unit 212 converts everything into distances. That is, the amount of movement of a substance or the like is obtained by multiplying a distance by a speed, but the edge characteristic calculation unit 212 standardizes the speed to a constant value, projects the amount of movement onto the distance, and uses this as edge information. Alternatively, it is also possible to standardize the distance to a constant value, express the amount of movement by the speed, and use it as edge information.

The ecosystem function network generation unit 215 acquires the coordinates and characteristic information of each calculated node from the node characteristic calculation unit 211, and acquires the distance and characteristic information of each calculated edge from the edge characteristic calculation unit 212. The ecosystem function network generation unit 215 generates an ecosystem function network of a conservation target area from the acquired information.

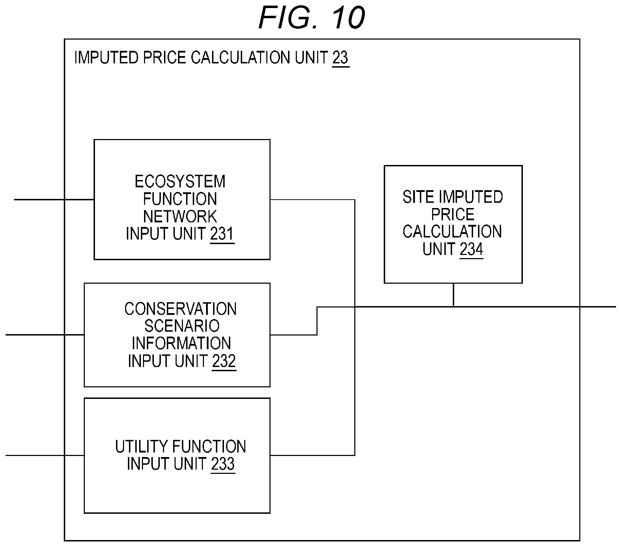

Next, a conceptual description of the processing of the imputed price calculation unit 23 will be described. FIG. 10 shows an example of a logical configuration of the imputed price calculation unit 23. The imputed price calculation unit 23 calculates an imputed price of a conservation action in each conservation site. The imputed price calculation unit 23 calculates an imputed price of a conservation scenario from the ecosystem function network and conservation scenario information including budget constraint by using an economic evaluation method for evaluating the imputed price. The economic evaluation method includes imputed price calculation using Lagrange's undetermined multiplier method and the optimization of an imputed price change in each period in dynamic programming using an optimal control theory such as Pontryan's maximization principle.

The imputed price calculation unit 23 includes an ecosystem function network input unit 231, a conservation scenario information input unit 232, a utility function input unit 233, and a site imputed price calculation unit 234. The ecosystem function network input unit 231 acquires information on the ecosystem function network generated by the ecosystem function network generation unit 215 and stored in, for example, the auxiliary storage device 323. The conservation scenario information input unit 232 acquires the conservation scenario information generated by the conservation information integration unit 22 from, for example, the auxiliary storage device 323. The utility function input unit 233 acquires a utility function from, for example, the conservation information integration unit 22.

The site imputed price calculation unit 234 calculates an imputed price (potential price) of each site (point) having one or more ecosystem functions. The site imputed price calculation unit 234 calculates changes in an imputed price of each site over time due to a conservation scenario using dynamic programming that utilizes an optimal control theory such as the Lagrange's undetermined multiplier method and Pontryan's maximum principle. To calculate the imputed price, a value Hamiltonian Hi of each site i is defined.

[Math. 1]

$$\mathcal{H}_i(t, k_t, l_t, \lambda_t) = u(t, k_t, l_t) + \lambda_t f(t, k_t, l_t)$$

Here, t represents a period (time), $k_t$ of the site i represents capital in the period t, $l_t$ represents consumption of capital at the site i in the period t, and $\lambda_t$ represents an imputed price of the site i in the period t. In addition, u is a utility function of the site i, and f is a function indicating an increase or decrease in capital at the site i.

The capital $k_t$ is a variable representing the amount of economic capital of the node in the period t, and the consumption $l_t$ is a variable representing the consumption of economic capital of the site in the period t. The utility function of the site i represents the utility brought about by utilizing all functions of the site i. The utility function is defined in advance for the site i. The utility function of the site i is represented by, for example, the product of economic capital and natural capital, and indicates greater utility for developing the economic scale while maintaining the environment.

When the utility function is represented by the product of economic capital and natural capital, and a functional form of economic capital is predetermined, a function of the economic capital can be estimated from financial information by using machine learning or a statistical method for a model that shows the functional form of the economic capital, for example, the Ramsey model. A relationship between an ecosystem function, an ecosystem service, and natural capital is used as a method for the system to estimate a function of the natural capital.

It is generally said that ecosystem functions have one of nature's properties of supporting functions, supply functions, adjustment functions, and cultural contribution. The supporting functions include, for example, the circulation of substances such as nitrogen resources and carbon atoms, soil formation, and primary production. The supply functions include, for example, food supply, fuel supply, and water supply. The adjustment functions include actions such as climate adjustment, flood control, water purification, soil purification, and air purification. The cultural contributions include, for example, the influence on aesthetics, spirit, and education.

In this manner, ecosystem functions refer to nature's reserves (stocks) and flows brought about by those stocks. Here, natural capital generally refers to stocks formed and stored by nature, such as forests, soil, water, air, and biological resources. Thus, natural capital is represented in a form that sums up or synthesizes ecosystem functions related to the aforementioned stocks, for example, the amount of carbon storage of forests, in some functional forms.

As an example, a natural capital Ni of the site i can be represented by linearly combining the ecosystem functions related to stocks, among ecosystem functions $Q_i$ of the nodes of the site I, with an appropriate weighting coefficient $a_k$. Furthermore, a natural capital N of an area can be represented by linearly adding the natural capital Ni of the site i with an appropriate weighting coefficient bi.

[Math. 2]

$$Ni = N_{i,0} + \sum_{k=1}^{n}\left(a_k Q_{i,k}\right)$$

[Math. 3]

$$N = N_0 + \sum_{i=1}^{m}(b_i N_i)$$

Here are some examples of economic capital and natural capital that define a utility function of a site. For example, in the case of a forestry area node, economic capital is the sum of human capital, facility capital, and land necessary for forestry, and money obtained from sales of wood produced using them, and appears in financial information of forestry. Natural capital refers to the entire surrounding environment necessary for forestry, such as soil and rivers necessary for the circulation of nutrients in forestry forests. There is also an influence from adjacent natural forests. For example, in the case of a farm node, economic capital is the sum of human capital, facility capital, and land necessary for production in farms, and money obtained from sales of food produced using them, and appears in financial information of agriculture.

Natural capital refers to the entire surrounding environment necessary for production in farms, such as soil, rivers that provide water for irrigation, organic matter that flies in from the surroundings, and animals that provide organic matter. In the case of a natural forest node, there is no economic capital, and natural capital that affects the forest node is the forest itself in the forest node. In addition, there are other natural environments that bring about interactions between nodes, such as surrounding place-of-business nodes, forestry area nodes, and farm nodes. For example, in the case of a park node, economic capital is the sum of human capital, facility capital, and land required to maintain a park, and a budget for maintaining them, and appears in financial information of park maintenance.

Natural capital of a park is forest, a pond, swamp, grassland, and soil within the park. In the case of a revetment and riverbank node, the natural capital is the sum of human capital, facility capital, and land required to maintain a revetment and riverbank, and a budget for maintaining them, and appears in financial information of administration.

The natural capital of the riverbank node has an effect of maintaining forest, grassland, soil, and river edges within the site. In the case of an ocean and lake node, there is no economic capital, and natural capital is the forest itself of the ocean and lake node. Among them, there are aquatic plants, algae, and fish that live on the bottom. In the case of a fishery and aquaculture node, the natural capital is the sum of human capital, facility capital, and land necessary for fishery and aquaculture, and money obtained from sales of wood produced using them, and appears in financial information of fishery and aquaculture. Natural capital is the ocean and lake in the surrounding environment.

The function f indicating an increase or decrease in capital is defined in advance for the site i. Out of the economic capital and the natural capital described above, the function f refers to an increase or decrease in economic capital. In the case of the forestry area node, it has been described that economic capital is the sum of human capital, facility capital, and land necessary for forestry, and money obtained from sales of wood produced using them, and the function f is represented by a differentiable function using these pieces of information as input values.

Here, it can be said that, in the economic capital kt in the period t, economic capital allocated to production is a production budget X, and economic capital allocated to maintenance and improvement of natural capital that contributes to production is a conservation budget Y. Further, in production, economic capital increases or decreases due to a difference between the amount of consumption $l_t$ of the economic capital allocated to production and the amount of new economic capital obtained by buying and selling products.

A function f having the same structure is obtained for a farm node and a fishery and aquaculture node. On the other hand, for example, in the case of a node maintained by public investment such as a revetment and riverbank node, a function f is a function that represents an increase or decrease in human capital, facility capital, and land required to maintain a revetment and riverbank, and a budget for maintaining them. In addition, in the case of a node that represents the natural environment, for example, a forest node, there is no increase or decrease in economic capital, and thus the function f is a constant.

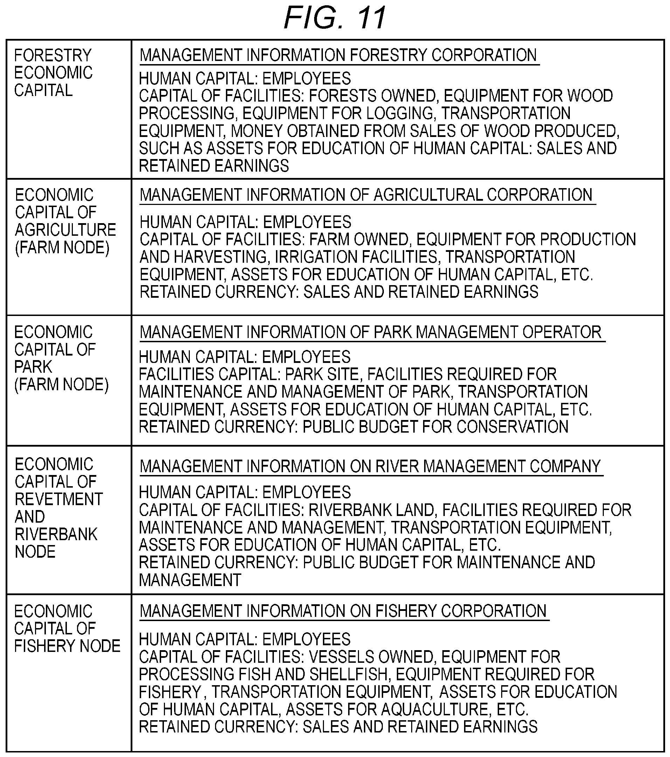

FIG. 11 shows an example of information referred to in order to obtain a utility function u and an asset increase/decrease function f. This information can be input when the user uses the system. It is also possible to extract average companies of each type of industry from public financial statements or regional statistical data, model them, and set a utility function and an asset increase/decrease function f. This model can also be described using functions that represent companies that appear in economics.

An imputed price of the site i can be determined by dynamic optimization based on a so-called optimal control theory from a value Hamiltonian Hi and a constraint condition g on budgets and ecosystem functions of nodes. That is, an imputed price difference ($\lambda_{t+1} - \lambda_t$) between the period (t + 1) and the period t can be determined from the following partial differential equation. When the imputed price difference is determined by dynamic optimization based on an optimal control theory, the amount of capital $k_t$ to be invested in each period and the amount of consumption $l_t$ are determined to maximize the utility function by the final period t = T. Here, a relationship between $k_t$ and $l_t$ is clear with the function f related to an increase or decrease in capital. Thus, when kt is determined, $l_t$ can be obtained at the same time. Furthermore, the imputed price of the invested capital kt is calculated as $\lambda_t$. Here, ($k_t$ + 1 - $k_t$) is represented by the function f indicating an increase or decrease in capital.

[Math. 4]

$$\frac{\partial}{\partial l}\mathcal{H}_i(t, k_t, l_t, \lambda_t) + \mu_t\frac{\partial g}{\partial l}(t, k_t, l_t) = 0$$

[Math. 5]

$$\frac{\partial}{\partial \lambda}\mathcal{H}_i(t, k_t, l_t, \lambda_t) = k_{t+1} - k_t$$

[Math. 6]

$$\frac{\partial}{\partial k}\mathcal{H}_i(t, k_t, l_t, \lambda_t) + \mu_t\frac{\partial g}{\partial k}(t, k_t, l_t) = \lambda_{t+1} - \lambda_t$$

Here, $\mu_t$ corresponds to the imputed price $\lambda_t$ in the period t evaluated at the initial stage (period 0). It is calculated at the same time as $\lambda_t$ during a process of calculating Formulas 2 to 4. Thereby, it is also possible to calculate an imputed price after the period t at the beginning of planning, and conversely, to calculate an imputed price before the period t. As described above, the constraint condition g includes a constraint on a budget of each node and a constraint in an ecosystem function network including interactions between nodes. The constraint on the budget of each node is represented by the following formula. Here, $Y_i$ is a budget allocated to the conservation of the site i, and $X_i$ is a budget allocated to the production of the site i. The sum of these budgets is a constant K. In a dynamic optimization method, this constant K is represented as K ≤ $k_t$ + 1 - kt.

[Math. 7]

$$Y_i + X_i = K$$

Next, there are the following constraints for each ecosystem function of the site i. The following formula (reaction diffusion equation) is based on a model described by elements of dissipation and diffusion, and represents the propagation of ecosystem functions on the ecosystem function network. The dissipation mentioned here refers to self-consumption and self-recovery of each ecosystem function of the site i, and is constituted by $R_i$, $X_i$, and $Y_i$, which will be described below. The propagation refers to features of the edges of the network structure described above, and is represented by $Q_{int}$, which will be described below.

[Math. 8]

$$\frac{d}{dt} Q_i(t) = \gamma_i R_i(t) + \alpha_i Y_i(t) - \beta_i X_i(t) + Q_{int}(t)$$

$Q_i$ represents one of one or more ecosystem functions of the site i. $R_i$ represents a spontaneous increase or decrease in the ecosystem function. As an example, it is defined and represented in advance by a function having the type of the function and the strength of the function as variables. It can also be estimated by a method of empirically deriving it through observation. $Y_i$ is a budget allocated to the conservation of the site i, in other words, the amount of economic capital allocated to conservation. $X_i$ is a budget allocated to the production of the site i, in other words, the amount of economic capital allocated to production, which is a constant multiple (including one time) of the consumption $I_t$. The amount of economic capital and a budget for sites (nodes) other than conservation sites are set depending on the type of each non-conservation site node as described above. $\gamma_i$, $\alpha_i$, and $\beta_i$ are coefficients that are set in advance. $\gamma_i$, $\alpha_i$, and $\beta_i$ are coefficients that are different for each ecosystem function and for each type of node. $Q_{int}$ represents the sum of advection from other sites, as shown in the following formula.

[Math. 9]

$$Q_{int}(t) = \sum_{j=1}^{N} I_{i,j}(d)$$

The constraint condition g is represented by a weighted sum of a budget constraint and an ecosystem function constraint, as shown in the following formula.

[Math. 10]

$$g = \rho_0 (X+Y) + \sum \rho_i ( \gamma_i R_i(t) + \alpha_i Y_i(t) - \beta_i X_i(t) + Q_{int}(t))$$

As described above, the imputed price change of the site i is determined based on the value Hamiltonian H and the constraint condition g. The value Hamiltonian H includes a utility function that aims to develop the economic scale (economic capital) while maintaining or improving the environment (natural capital). Thereby, it is possible to determine an imputed price of natural capital from the viewpoint of economic capital.

In addition, the constraint condition g includes ecosystem function constraints in addition to the conservation of economic capital and allocation to production (Formula 5). Furthermore, the ecosystem function constraints include an influence $Q_{int}$ from other sites. Thus, an imputed price of each site can be determined, inclusive of interactions of imputed prices between sites, through interactions in the ecosystem function network.

One or more conservation scenarios are prepared for the site i of the conservation site, and each conservation scenario includes information on a budget and conservation actions. As described above, the information on the conservation scenario is incorporated into a partial differential equation for determining the imputed price of the site i. Thereby, it is possible to determine an imputed price for each conservation scenario. Even in non-conservation sites, when there are business plans to maintain the environment from the viewpoint of each season, such as a forestry node, a farm node, and a fishery node, the plans and budgets can be used as scenarios for determining imputed prices. The business plans mentioned above include corporate activities having a substantial environment conservation effect, such as maintaining seaweed beds of fishing, and thus the business plans and budgets can be considered as conservation scenarios and conservation budgets.

The calculation method for an imputed price has been described for a case where a utility function is set for each node, but it is also possible to calculate an imputed price when a utility function is set as a time-related function, including an increase in the economy of the entire area and an increase in an environment conservation effect of the entire area, and the method will be described below. In this case, among utility functions U of the entire area, an economic scale of the entire area is the sum of the total amount of economic capital set at each node and a transaction amount of a secondary market of a target area.

The transaction amount of the secondary market of the target area is obtained from statistical data. In addition, the environment conservation effect of the entire area is measured by whether the environment of the area has improved in accordance with a conservation goal which is set by a local government of the target area. An ecosystem function representing items that constitute the conservation goal set by the local government of the target area is represented as a sum function Q_All of each ecosystem function Qi of each node, and it is represented that a conservation effect has been obtained with an increase in the ecosystem function of the entire area.

By defining a utility function of an area in this manner, it is possible to collectively represent an increase or decrease in the imputed price of the entire area by using results of calculation of an increase or decrease in a utility function of each node and the magnitude of its imputed price. The imputed price of the entire area calculated in this manner may be displayed on a display unit to be described below, and the user may confirm the effect of conservation.

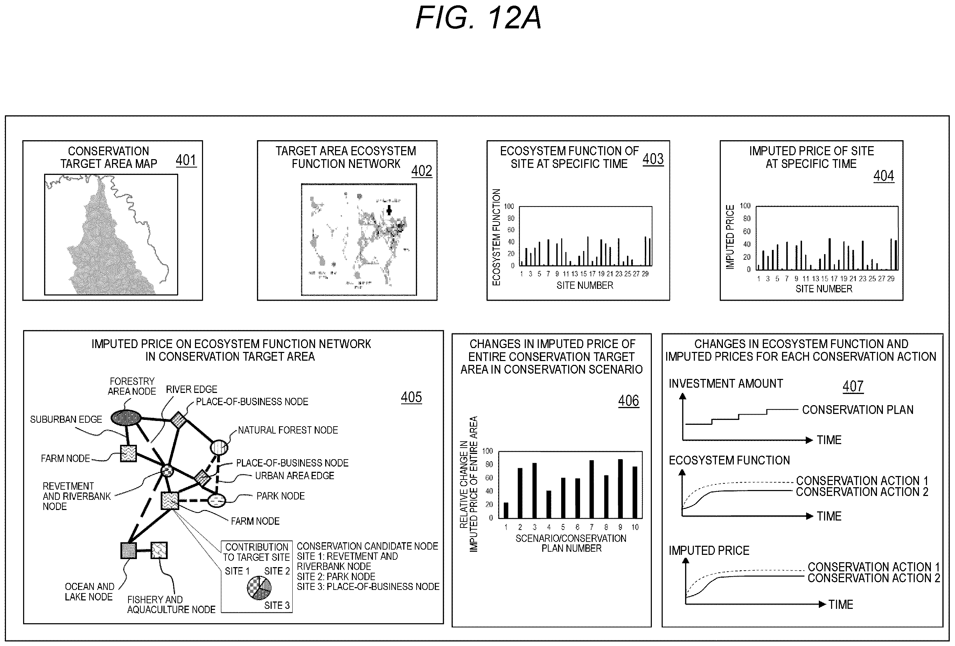

Hereinafter, an example of information presented to the user by the conservation effect display unit 24 will be described below. FIG. 12A shows an example of a display image generated by the conservation effect display unit 24 and output by the output device 325. By referring to the display image, the user can confirm information on economic effects using a conservation scenario in a conservation target area and a conservation site.

The example of the display image shown in FIG. 12A includes a conservation target area map 401, a target area ecosystem function network 402, an ecosystem function of site at specific time 403, an imputed price of site at specific time 404, an imputed price on an ecosystem function network in conservation target area 405, a change in imputed price of entire conservation target area in conservation scenario 406, and a change in ecosystem function and imputed price for each conservation action 407.

The conservation target area map 401 shows a map of a conservation target area. The map of the conservation target area can be generated from the land use information 11. The target area ecosystem function network 402 shows an image of an ecosystem function network structure of a target area generated by the network structure estimation unit 21. As described above, the ecosystem function network structure includes nodes with different shapes for each function, and edges connecting nodes having interactions.

In the ecosystem function of site at specific time 403, an estimated value of the strength of a specific function at specific time of each of all sites with respect to a conservation scenario combination constituted by specific conservation scenarios of all of the respective sites is shown by a bar graph. As described above, changes in the ecosystem function over time can be estimated using Formula 6. The conservation effect display unit 24 can estimate the strength of the ecosystem function at specific time from the current strength of the ecosystem function and the changes over time and generate the image.

In the imputed price of site at specific time 404, an estimated value of an imputed price at specific time of each of all sites with respect to a conservation scenario combination constituted by specific conservation scenarios of all of the respective sites is shown by a bar graph. The imputed price of each site is calculated by the site imputed price calculation unit 234 as described above.

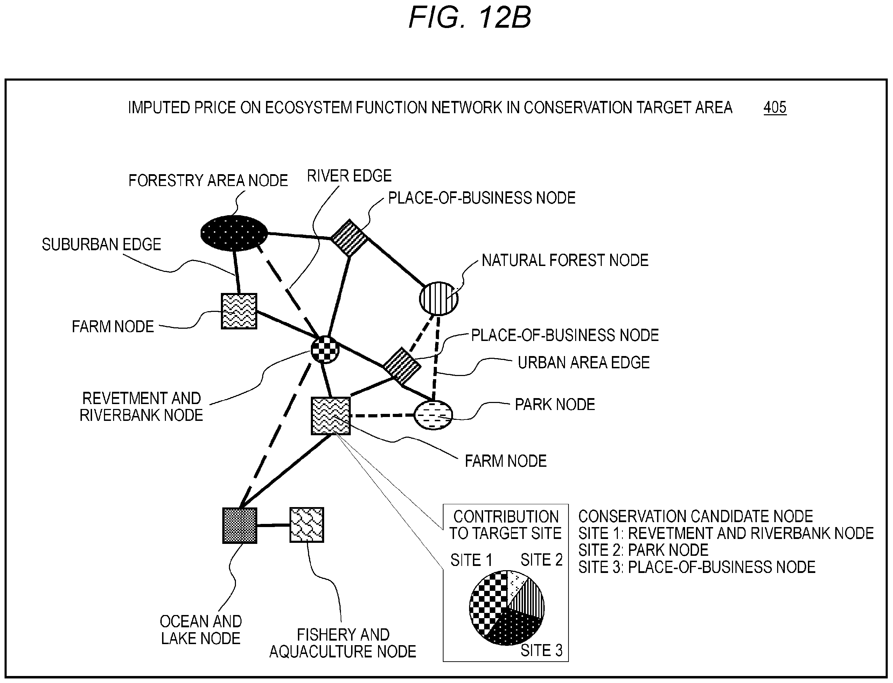

FIG. 12B shows details of the imputed price on an ecosystem function network in conservation target area 405 in the display image shown in FIG. 12A. The imputed price on an ecosystem function network in conservation target area 405 shows an image in which the conservation target area map 401 and the target area ecosystem function network 402 are superimposed on each other. Furthermore, information on the contribution from other sites to an imputed price of a selected site at specific time is shown by a pie chart. Here, an example of a method of calculating contribution from other sites is a method of calculating a contribution rate of an imputed price by estimating how the amount of advection between sites is overlaid from the types of ecosystem functions included in adjacent nodes and taking a magnitude relationship between overlay coefficients into account.

In the change in imputed price of entire conservation target area in conservation scenario 406, an estimated value of a change in an imputed price of the entire conservation target area using each of different conservation scenarios at a specific site is shown by a bar graph. Conservation scenarios of other sites are fixed. The change in the imputed price of the entire conservation target area is the sum of changes in imputed prices of all sites.

The change in ecosystem function and imputed price for each conservation action 407 shows changes in ecosystem function and imputed price over time due to different conservation actions (conservation scenarios) of a specific site. Conservation scenarios of other sites are fixed. The example shown in FIG. 12A shows changes in ecosystem function and imputed price of the site over time due to different conservation actions in the same budget plan. The strength of the ecosystem function and an imputed price of the site can be estimated as described above.

Here, $\mu_t$ corresponds to the imputed price $\lambda_t$ in the period t evaluated at the initial stage (period 0). It is calculated in the calculation process described above. Thereby, it is also possible to calculate an imputed price after the period t at the beginning of planning, and conversely, to calculate an imputed price before the period t. Although not shown in the display diagram of FIG. 12A, an imputed price of a conservation action before the target period and an imputed price of a conservation action after the target period can be compared with each other on this display unit in this manner, and thus it is possible to configure a display unit that supports long-term planning.

The output unit 25 outputs information similar to the information shown in FIG. 12A to an external database. For example, the database can be accessed by specific related parties or unspecified people. By accessing the database, a user can access the information similar to the information shown in FIG. 12A. The output unit 25 or the conservation effect display unit 24 may be omitted.

As described above, in one embodiment of the present invention, it is possible to evaluate how an increase in economic value of an ecosystem function restored by conservation performed at a conservation site propagates to other sites, and to create a conservation plan so that an increase in economic value of the entire area becomes larger.

The present invention is not limited to the above-described embodiment, and various modification examples are included. For example, the above-described embodiment has been described in detail to describe the present invention in an easy-to-understand manner, and is not necessarily limited to those having all of the configurations described. In addition, it is possible to replace a part of a configuration of a certain embodiment with a configuration of another embodiment, and it is also possible to add a configuration of a certain embodiment to a configuration of another embodiment. In addition, it is possible to perform addition, deletion, or replacement of another configuration for a part of a configuration of each embodiment.

In addition, some or all of the above-described configurations, functions, processing units, and the like may be realized by hardware, for example, by designing them as integrated circuits. In addition, the above-described configurations, functions, and the like may be realized by software by a processor analyzing and executing a program for realizing each of the functions. Information such as a program, a table, and a file for realizing each function can be stored in a memory, a recording device such as a hard disk or an SSD, or a recording medium such as an IC card or an SD card.

In addition, control lines and information lines are those that are considered to be necessary for description, and do not necessarily show all control lines and information lines in a product. In reality, it can be considered that almost all configurations are connected to each other.

**Claims**

1. An environment evaluation system comprising:

   a computation device; and
   a storage device, wherein
   the storage device stores
   first data on an ecosystem of a conservation target area,
   second data on land use of the conservation target area, and
   third data on a conservation scenario in the conservation target area, and
   the computation device
   extracts a network structure in which areas having natural capital in the conservation target area are nodes based on the second data,
   estimates an ecosystem function network that represents types of ecosystem functions of the nodes and time-related functions of interactions between the nodes based on the first data, the third data, and the network structure,
   calculates an economic value of a change in the ecosystem function of the node using a conservation scenario for the node based on a budget constraint related to the conservation scenario for the node which is calculated from the ecosystem function network and the third data, and
   outputs the economic value.

2. The environment evaluation system according to claim 1, wherein the time-related function of the interaction between the nodes is a function estimated from a model described by elements of dissipation and diffusion of the ecosystem functions of the nodes.

3. The environment evaluation system according to claim 2, wherein the model described by the elements of dissipation and diffusion of the ecosystem functions of the nodes is based on a reaction diffusion equation.

4. The environment evaluation system according to claim 1, wherein

the computation device calculates the economic value using a utility function set for each node, and
the utility function is a time-related function including an increase in economy of each node and an increase in an environment conservation effect.

5. The environment evaluation system according to claim 4, wherein the computation device calculates an economic value for maximizing the utility function by setting, as constraint conditions, functions described based on the budget constraint, the dissipation of the ecosystem functions on the nodes of the ecosystem function network, and the diffusion of the ecosystem functions due to the interactions between the nodes.

6. The environment evaluation system according to claim 4, wherein the computation device calculates an imputed price of each node for maximizing the utility function by setting, as constraint conditions, functions described based on the budget constraint, the dissipation of the ecosystem functions on the nodes of the ecosystem function network, and the diffusion of the ecosystem functions due to the interactions between the nodes.

7. The environment evaluation system according to claim 1, wherein

the computation device calculates the economic value using a utility function, and
the utility function is a time-related function including an increase in economy of the entire conservation target area and an increase in an environment conservation effect.

8. The environment evaluation system according to claim 1, wherein

the computation device displays evaluation information including the economic value on a display device, and
the evaluation information includes a map of the conservation target area, an ecosystem function network of the conservation target area, a change in an imputed price of the entire target area in the conservation scenario, and a change in an imputed price of the entire conservation target area in the conservation scenario.

9. A method of evaluating an environment conservation scenario by a system, wherein

the system stores
first data on an ecosystem of a conservation target area,
second data on land use of the conservation target area, and
third data on a conservation scenario in the conservation target area, and
the method comprises causing the system to
extract a network structure in which areas having natural capital in the conservation target area are nodes based on the second data,
estimate an ecosystem function network that represents types of ecosystem functions of the nodes and time-related functions of interactions between the nodes based on the first data, the third data, and the network structure,
calculate an economic value of a change in the ecosystem function of the node using a conservation scenario for the node based on a budget constraint related to the conservation scenario for the node which is calculated from the ecosystem function network and the third data, and
output the economic value.

FIG. 1

ECOSYSTEM FUNCTION NETWORK IMPUTED PRICE CALCULATION SYSTEM 10

# FIG. 2

321

320

COMPUTATION DEVICE

322

MAIN STORAGE DEVICE

323

AUXILIARY
STORAGE DEVICE

NETWORK
INTERFACE

327

324

INPUT DEVICE

325

OUTPUT DEVICE

326

ECOSYSTEM FUNCTION NETWORK
IMPUTED PRICE CALCULATION SYSTEM

# FIG. 3

| ANIMAL HABITAT INFORMATION | OBSERVATION INFORMATION<br>· AUDIO DATA (AUDIO, DATE AND TIME, POINT)<br>· IMAGE DATA (IMAGE, DATE AND TIME, POINT)<br><br>STATISTICAL DATA<br>· STATISTICAL DATA THAT IS PERIODICALLY OBSERVED ON GROUND BY LOCAL GOVERNMENT |
|---|---|
| VEGETATION INFORMATION (PRIMARY PRODUCTION) | OBSERVATION INFORMATION<br>· SATELLITE IMAGE (IMAGE, DATE AND TIME, POINT)<br><br>STATISTICAL DATA<br>· STATISTICAL DATA THAT IS PERIODICALLY OBSERVED ON GROUND BY LOCAL GOVERNMENT |
| MATERIAL BALANCE INFORMATION (AMOUNT OF CARBON STORAGE) | · VEGETATION INFORMATION<br>· TREE SHAPE INFORMATION (INFRARED LASER MEASUREMENT DATA ON THICKNESSES AND HEIGHTS OF TRUNKS OF TREES, AND INFORMATION ON DATE AND TIME AND POINT) |
| MATERIAL BALANCE INFORMATION (WATER PURIFICATION, NUTRIENT SALT QUANTITY) | · WATER FLOW RATE DATA OF RIVERS AND LAKES (INFORMATION ON FLOW RATE, WATER DEPTH, DATE AND TIME, AND POINT)<br>· WATER QUALITY DATA OF RIVERS AND LAKES (INFORMATION ON DISSOLVED OXYGEN AMOUNT, PH, SUFFOCATION CONTENT, DATE AND TIME, AND POINT) |

ENVIRONMENT INFORMATION

## FIG. 4

| LAND USE MAP | OBSERVATION INFORMATION<br>· SATELLITE IMAGE (IMAGE, DATE AND TIME, POINT)<br><br>STATISTICAL DATA<br>· STATISTICAL DATA THAT IS PERIODICALLY OBSERVED ON GROUND BY LOCAL GOVERNMENT<br><br>·STATISTICAL DATA ON LAND USE, INCLUDING FARMS OF AREAS, INDUSTRIAL AREAS, AND FISHING INDUSTRIES OF AREAS, PARTICULARLY, DATA ON SIZE AND SALES OF EACH TYPE OF INDUSTRY. |
|---|---|

LAND USE INFORMATION

## FIG. 5

| CONSERVATION SITE ENVIRONMENT INFORMATION | INFORMATION ON ECOSYSTEM OF CONSERVATION SITE DATA ON ECOSYSTEM INDIVIDUALLY OWNED BY OWNER |
|---|---|
| CONSERVATION SITE GEOGRAPHIC INFORMATION | GEOGRAPHIC INFORMATION ON CONSERVATION SITE OWNED BY OWNER (SECTIONS, CENTER COORDINATES) |
| CONSERVATION SCENARIO INFORMATION | · CONSERVATION BUDGET<br>· IMPLEMENTATION MATTERS AND IMPLEMENTATION TIME<br>· CURRENT VALUES AND TARGET VALUES OF VARIABLES OF SPECIFIC ECOSYSTEM FUNCTION<br>· PAST PERFORMANCE OF CONSERVATION ACTIONS |

CONSERVATION SITE INFORMATION

## FIG. 6

CONSERVATION INFORMATION
INTEGRATION UNIT 22

CONSERVATION SITE
INFORMATION
PROCESSING UNIT
221

CONSERVATION SITE
GEOGRAPHIC INFORMATION
OUTPUT UNIT
222

CONSERVATION AREA
ENVIRONMENT INFORMATION
OUTPUT UNIT
223

CONSERVATION SCENARIO
INFORMATION OUTPUT UNIT
224

UTILITY FUNCTION
OUTPUT UNIT
225

## FIG. 7A
ECOSYSTEM FUNCTION NETWORK STRUCTURE

## FIG. 7B
### LANDSCAPE

FORESTRY AREA 521

RIVER 532

531 BUSINESS PLACE

NATURAL FOREST 530

FARM 522

REVETMENT AND 523 RIVERBANK

BUSINESS PLACE 529

528 URBAN AREA

FARM 524

527 PARK

OCEAN AND LAKE 525

526 FISHERY AND AQUACULTURE

## FIG. 7C
### ECOSYSTEM FUNCTION NETWORK STRUCTURE

FORESTRY AREA NODE 551

RIVER EDGE 571

560 PLACE-OF-BUSINESS NODE

SUBURBAN EDGE 572

NATURAL FOREST NODE 559

FARM NODE 552

558 PLACE-OF-BUSINESS NODE

573 URBAN AREA EDGE

553

557 PARK NODE

REVETMENT AND RIVERBANK NODE

556 FARM NODE

OCEAN AND 554 LAKE NODE

555 FISHERY AND AQUACULTURE NODE

# FIG. 8

INTERACTION BETWEEN NODES

# FIG. 9

NETWORK STRUCTURE ESTIMATION UNIT 21

ENVIRONMENT INFORMATION PROCESSING UNIT 216

LAND USE INFORMATION PROCESSING UNIT 217

CONSERVATION SITE ENVIRONMENT INFORMATION PROCESSING UNIT 218

CONSERVATION SITE GEOGRAPHIC INFORMATION PROCESSING UNIT 219

NODE CHARACTERISTIC CALCULATION UNIT 211

EDGE CHARACTERISTIC CALCULATION UNIT 212

ECOSYSTEM FUNCTION NETWORK GENERATION UNIT 215

# FIG. 10

IMPUTED PRICE CALCULATION UNIT 23

ECOSYSTEM
FUNCTION
NETWORK
INPUT UNIT 231

CONSERVATION
SCENARIO
INFORMATION
INPUT UNIT 232

UTILITY FUNCTION
INPUT UNIT 233

SITE IMPUTED
PRICE
CALCULATION
UNIT 234

## FIG. 11

| FORESTRY ECONOMIC CAPITAL | MANAGEMENT INFORMATION FORESTRY CORPORATION<br>HUMAN CAPITAL: EMPLOYEES<br>CAPITAL OF FACILITIES: FORESTS OWNED, EQUIPMENT FOR WOOD PROCESSING, EQUIPMENT FOR LOGGING, TRANSPORTATION EQUIPMENT, MONEY OBTAINED FROM SALES OF WOOD PRODUCED, SUCH AS ASSETS FOR EDUCATION OF HUMAN CAPITAL: SALES AND RETAINED EARNINGS |
|---|---|
| ECONOMIC CAPITAL OF AGRICULTURE (FARM NODE) | MANAGEMENT INFORMATION OF AGRICULTURAL CORPORATION<br>HUMAN CAPITAL: EMPLOYEES<br>CAPITAL OF FACILITIES: FARM OWNED, EQUIPMENT FOR PRODUCTION AND HARVESTING, IRRIGATION FACILITIES, TRANSPORTATION EQUIPMENT, ASSETS FOR EDUCATION OF HUMAN CAPITAL, ETC.<br>RETAINED CURRENCY: SALES AND RETAINED EARNINGS |
| ECONOMIC CAPITAL OF PARK (FARM NODE) | MANAGEMENT INFORMATION OF PARK MANAGEMENT OPERATOR<br>HUMAN CAPITAL: EMPLOYEES<br>FACILITIES CAPITAL: PARK SITE, FACILITIES REQUIRED FOR MAINTENANCE AND MANAGEMENT OF PARK, TRANSPORTATION EQUIPMENT, ASSETS FOR EDUCATION OF HUMAN CAPITAL, ETC.<br>RETAINED CURRENCY: PUBLIC BUDGET FOR CONSERVATION |
| ECONOMIC CAPITAL OF REVETMENT AND RIVERBANK NODE | MANAGEMENT INFORMATION ON RIVER MANAGEMENT COMPANY<br>HUMAN CAPITAL: EMPLOYEES<br>CAPITAL OF FACILITIES: RIVERBANK LAND, FACILITIES REQUIRED FOR MAINTENANCE AND MANAGEMENT, TRANSPORTATION EQUIPMENT, ASSETS FOR EDUCATION OF HUMAN CAPITAL, ETC.<br>RETAINED CURRENCY: PUBLIC BUDGET FOR MAINTENANCE AND MANAGEMENT |
| ECONOMIC CAPITAL OF FISHERY NODE | MANAGEMENT INFORMATION ON FISHERY CORPORATION<br>HUMAN CAPITAL: EMPLOYEES<br>CAPITAL OF FACILITIES: VESSELS OWNED, EQUIPMENT FOR PROCESSING FISH AND SHELLFISH, EQUIPMENT REQUIRED FOR FISHERY, TRANSPORTATION EQUIPMENT, ASSETS FOR EDUCATION OF HUMAN CAPITAL, ASSETS FOR AQUACULTURE, ETC.<br>RETAINED CURRENCY: SALES AND RETAINED EARNINGS |

# FIG. 12A

CONSERVATION TARGET AREA MAP 401

TARGET AREA ECOSYSTEM FUNCTION NETWORK 402

ECOSYSTEM FUNCTION OF SITE AT SPECIFIC TIME 403

IMPUTED PRICE OF SITE AT SPECIFIC TIME 404

IMPUTED PRICE ON ECOSYSTEM FUNCTION NETWORK IN CONSERVATION TARGET AREA 405

FORESTRY AREA NODE  RIVER EDGE
PLACE-OF-BUSINESS NODE
SUBURBAN EDGE
NATURAL FOREST NODE
FARM NODE
PLACE-OF-BUSINESS NODE
URBAN AREA EDGE
REVETMENT AND RIVERBANK NODE
PARK NODE
FARM NODE
CONTRIBUTION TO TARGET SITE
SITE 1   SITE 2
SITE 3
CONSERVATION CANDIDATE NODE
SITE 1: REVETMENT AND RIVERBANK NODE
SITE 2: PARK NODE
SITE 3: PLACE-OF-BUSINESS NODE
OCEAN AND LAKE NODE
FISHERY AND AQUACULTURE NODE

CHANGES IN IMPUTED PRICE OF ENTIRE CONSERVATION TARGET AREA IN CONSERVATION SCENARIO 406

RELATIVE CHANGE IN IMPUTED PRICE OF ENTIRE AREA
SCENARIO/CONSERVATION PLAN NUMBER

CHANGES IN ECOSYSTEM FUNCTION AND IMPUTED PRICES FOR EACH CONSERVATION ACTION

INVESTMENT AMOUNT 407
CONSERVATION PLAN
TIME

ECOSYSTEM FUNCTION
CONSERVATION ACTION 1
CONSERVATION ACTION 2
TIME

IMPUTED PRICE
CONSERVATION ACTION 1
CONSERVATION ACTION 2
TIME

# FIG. 12B

IMPUTED PRICE ON ECOSYSTEM FUNCTION NETWORK IN CONSERVATION TARGET AREA    405

FORESTRY AREA NODE

RIVER EDGE

PLACE-OF-BUSINESS NODE

SUBURBAN EDGE

NATURAL FOREST NODE

FARM NODE

PLACE-OF-BUSINESS NODE

URBAN AREA EDGE

REVETMENT AND RIVERBANK NODE

PARK NODE

FARM NODE

CONTRIBUTION TO TARGET SITE

SITE 1    SITE 2

SITE 3

CONSERVATION CANDIDATE NODE
SITE 1: REVETMENT AND RIVERBANK NODE
SITE 2: PARK NODE
SITE 3: PLACE-OF-BUSINESS NODE

OCEAN AND LAKE NODE

FISHERY AND AQUACULTURE NODE

EP 4 604 030 A1

**EUROPEAN SEARCH REPORT**

Europäisches
Patentamt
European
Patent Office
Office européen
des brevets

Application Number

EP 24 20 8770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/124963 A1 (TAYLOR TODD [US] ET AL) 28 April 2022 (2022-04-28) * paragraph [0002] - paragraph [0140]; figures 1a-9b * | 1-9 | INV. G06Q10/04 G06Q10/06 G06Q40/06 |
| A | JP 2014 026507 A (FUJITSU LTD) 6 February 2014 (2014-02-06) * paragraph [0002] - paragraph [0051]; figures 1-3 * | 1-9 | |
| A | US 2023/062591 A1 (MAO XUFENG [CN] ET AL) 2 March 2023 (2023-03-02) * paragraph [0002] - paragraph [0078]; figures 1-3 * | 1-9 | |

TECHNICAL FIELDS
SEARCHED (IPC)

G06Q

The present search report has been drawn up for all claims

| Place of search | Date of completion of the search | Examiner |
|---|---|---|
| Munich | 15 April 2025 | Pastore, Edoardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8770

This annex lists the patent family members relating to the patent documents cited in  the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| US 2022124963 A1 | 28-04-2022 | NONE | |
| JP 2014026507 A | 06-02-2014 | JP 6131541 B2 | 24-05-2017 |
| | | JP 2014026507 A | 06-02-2014 |
| US 2023062591 A1 | 02-03-2023 | CN 113657939 A | 16-11-2021 |
| | | US 2023062591 A1 | 02-03-2023 |

EPO FORM P0459

For more details about this annex : see Official Journal of the European Patent Office, No. 12/82

**REFERENCES CITED IN THE DESCRIPTION**

**Patent documents cited in the description**

- JP 2024021337 A

- JP 2014026507 A